# EUROPEAN PATENT APPLICATION

(11) **EP 1 795 063 A1**
(43) Date of publication of application: **13.06.2007**
(21) Application number: 05425860.3
(22) Date of filing: 01.12.2005
(51) Int. Cl.: A01D 34/73

(54) **A rotating square sectioned shaft assembled with squares supporting knives for bushes cutting and land deforestation**

(71) Applicant: Bighinati, Claudio, 21052 Busto Arsizio VA (IT); Ferraro, Lino, 21052 Busto Arsizio VA (IT); Brignoli, Antonio Benedetto, 21052 Busto Arsizio VA (IT)
(72) Inventor: Bighinati, Claudio, 21052 Busto Arsizio VA (IT); Ferraro, Lino, 21052 Busto Arsizio VA (IT); Brignoli, Antonio Benedetto, 21052 Busto Arsizio VA (IT)
(74) Representative: Tranquillo, Daria

(57) **Abstract**

A square sectioned shaft of different length and dimensions equipped with knives, able to mince and grind bushes shrubs branches and grass, therefore suitable for land deforestation work. It is built repeating by modularity and precise spacer the alternation of a couple of metallic supports called squares and an other identical couples rotated 90 degree if compared to the first one. Each couple of squares clamps and closes knives of same dimensions and weight and with specific blade inclination and cutting edge.

## Description

The main application field of this invention is agriculture and deforestation. This invention is about a particular square shaft, equipped with knives. Installed on suitable machines, it provides a specific deforestation cutting and mincing work of shrubs, bushes, undergrowth, grass and weed in general.

All the machines now used for deforestation work of shrubs, bushes, undergrowth, grass and weed have shafts composed of cylindrical pipes and blades and knives of different forms are installed by supports welded on the pipes themselves.

Now just this device causes an imperfect shaft balancing. This produces a poor efficiency of the machine, on which these cylindrical shafts are installed, and it makes its use more difficult and noisy.

Moreover the knives till now welded on these cylindrical shafts cannot mince into small pieces big and hard vegetable bodies, for example big branches. Because of their building form these knives are damaged when they meet stones or hard things on the ground.

Aim of this invention is to get through the explained disadvantages. In fact the supports, where the cutting edges are installed, are not welded on the shaft. They are replaced by couples of squares put onto the shaft. Moreover the cutting edges have a specific building form, specific cutting and inclination angle. Just thanks to these features they can grind, mince and turn to powder every solid vegetable body met in the ground without having important damages.

Besides the couples of squares supporting the cutting edges are assembled on the shaft in alternated positioning. This guarantees the modularity, which gives self-balancing to the shaft.

In order to transfer motion to the knives, the invention uses a square shaft. In the shaft there are metallic supports, called squares, which are holed at their opposite ends. Here there are installed knives alternating in positioning, as better explained in the following description.

In fact in the technical solution proposed two knives are mounted between the two squares at the opposite holed tops. The two squares, where the knives are installed, are divided by a specific spacer. The couple of squares so assembled is mounted on the shaft. By another spacer this couple is separated from another one, which is identical and installed on the same shaft but rotated 90 degree if compared to the previous couple.

The couples so assembled with a difference of 90 degree form a well balanced group and help the knives with grinding and mincing.

Thus the novelty of the invention is the presence of more groups composed of double squares with particular knives mounted on a square sectioned shaft. Alternation and repetition of these assembled details create a modularity, which gives a perfect balancing to the shaft during rotation. As a consequence you get a vibrations reduction and the machine is less noisy.

This invention brings another advantage in the field of shafts equipped with knives. The particular assembly of couples of squares by described alternations allows the building of shafts with different dimensions according to the different needs of the machine, in which they have to be installed. A further advantage is the possibility to replace each single piece if damaged or worn out without replacing the whole assembled shaft with all its knives. This means saving time and money in machine maintenance.

Another innovation element compared to the status of the previous technique is represented by the knives.

The knife is composed of two parts: a support called handle and the blade called cutting edge.

The handle is fixed to the squares by a pin and around this pin the handle moves because of the movement driven in the shaft. The cutting edge is welded at the other end of the handle.

The particular form of the cutting edge together with its angulations in comparison with the handle and the movement produced by rotation allow a more efficient cutting and a longer working life of the cutting edges.

The use of a sealing protection (no subject in this license) improves safety level in this kind of machines.

Thus it is clear that, compared with the existing technique status the so devised invention presents the following elements:
- perfect self-balancing of the assembled shaft
- assemblies without dimensions or length limits, according to different conditions and application fields
- less vibrations and noise
- more efficacy and efficiency in cutting
- longer working life of knives
- possibility of replacing damaged parts without replacing the entire assembled shaft.

All these aims are reached by the square shaft with knives installed as already better explained and as described even later. A pulley or a dragging device gives motion to the shaft and it transfers motion to the knives.

In fact on the end of the square shaft there are installed two flanges: one screwed, the other welded with a safety pin. Some rolling bearing are mounted on the flanges. Moreover the pulley or the dragging device are installed on the welded flange (pulley and dragging device are no subject in this license). Further features and advantages of the invention will be better explained by the following detailed description of an embodiment, given here by attached drawings only as an example, it is not the exclusive limited embodiment. Drawings shown in picture 1, picture 2 and picture 3 contain references. These references have the same number of the pictures, which represent them, except references about picture 1(24), picture 1(49), picture 1(50), picture 1(51).

Picture Nr. 1 shows a general view of the shaft composed of eight double squares couples. This specific drawing in fact shows a shaft picture 1(6), where 12 double squares couples are installed. At the ends flanges are shown, the screwed one picture 1 (7) and the welded one picture 1 (5), on which rolling bearings and dragging device are mounted. Invention details are shown in the following drawings.

Picture 2 shows the upper part of the shaft on the side of the welded flange. References picture 2(8) represent the squares (picture 8).

By references picture 2(9) there are indicated the cutting edges, welded on the handle (picture 9), which is placed between the two squares.

References picture 2(10) indicate the spacers (picture 10) between the two squares.

References 2(11) show the spacers (picture 11) between the couples of squares. References 2(12) represent the spacer between the flange and the first couple of squares (picture 12).

Drawing picture 3 shows the upper part of the shaft on the side of the screwed flange. Moreover in this picture there are the same references as in picture 2.

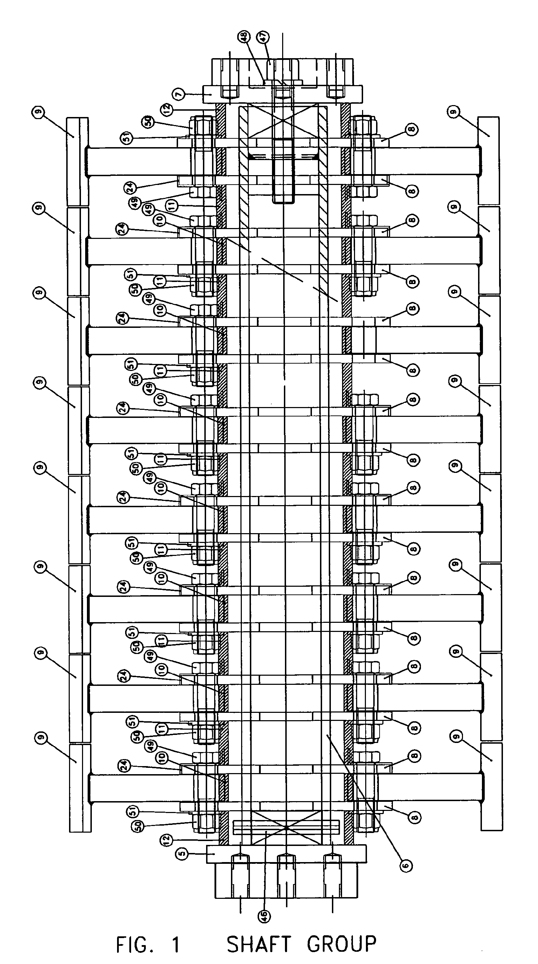

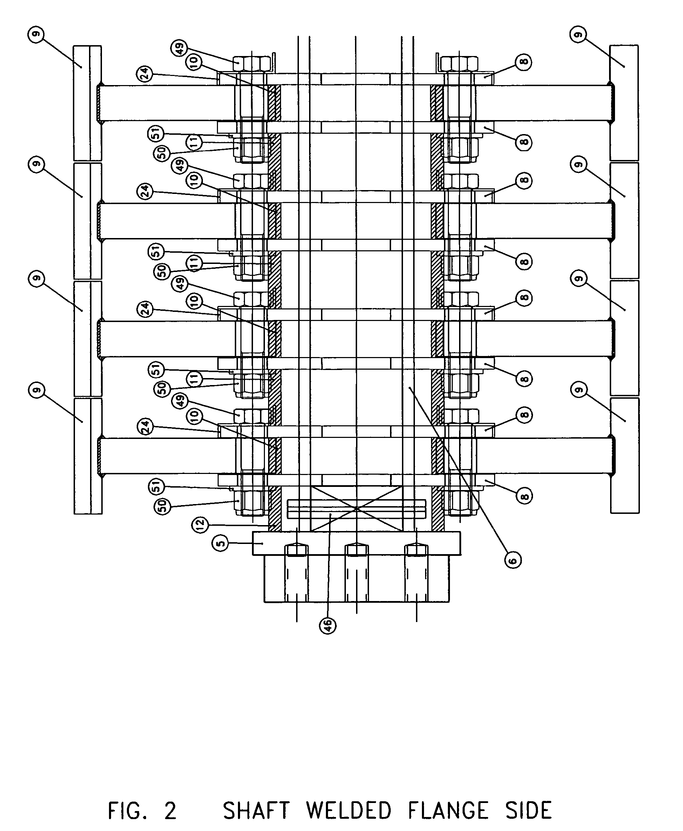

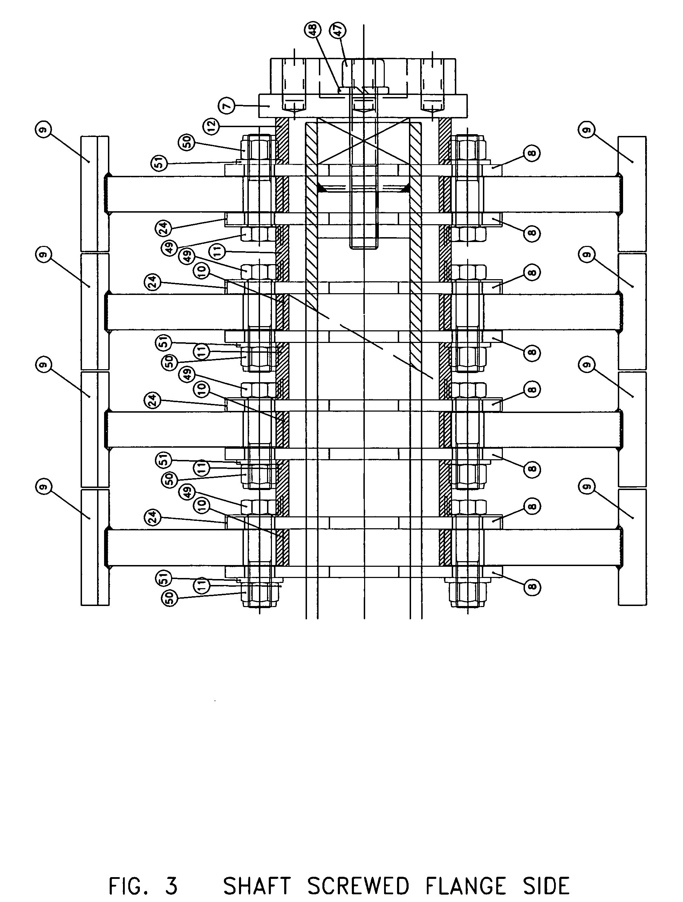

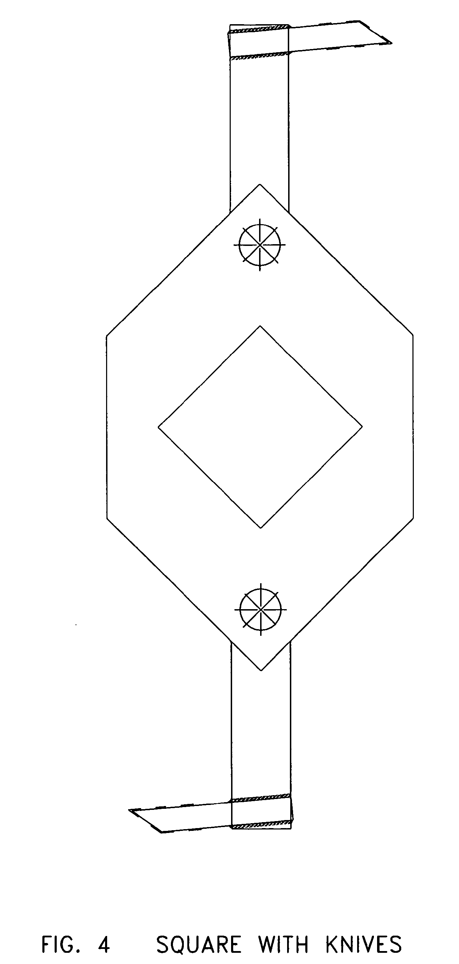

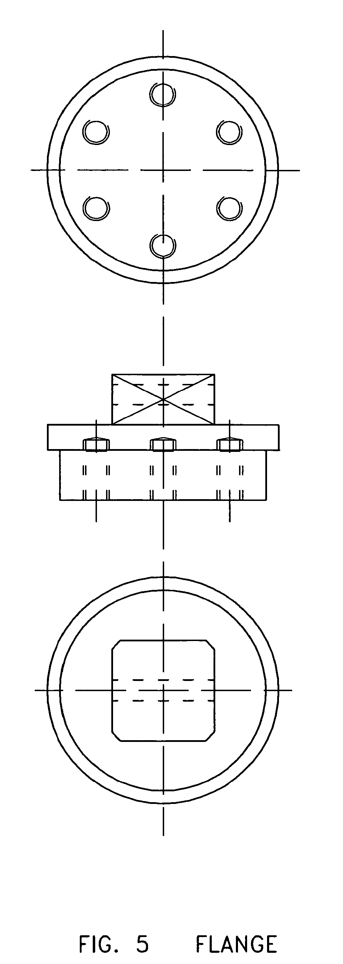

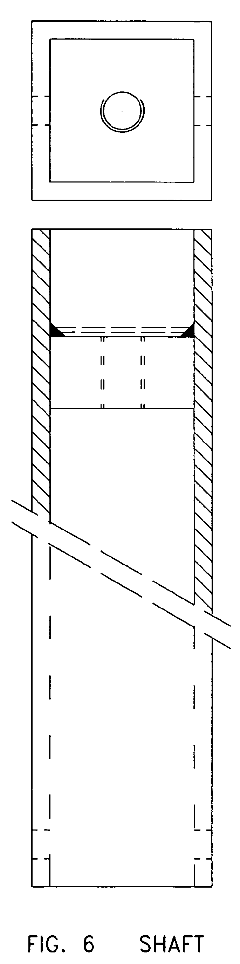

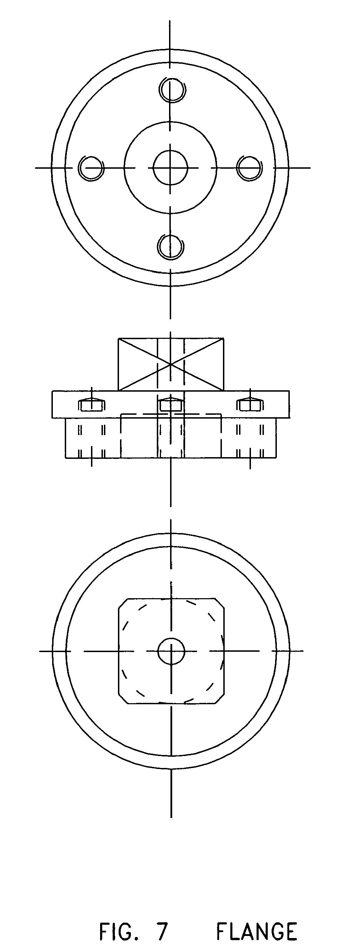

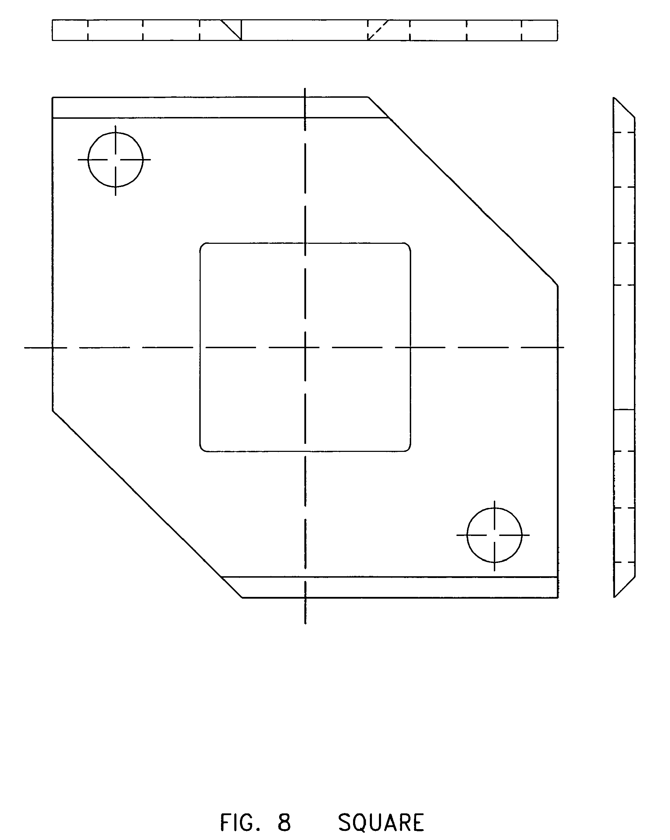

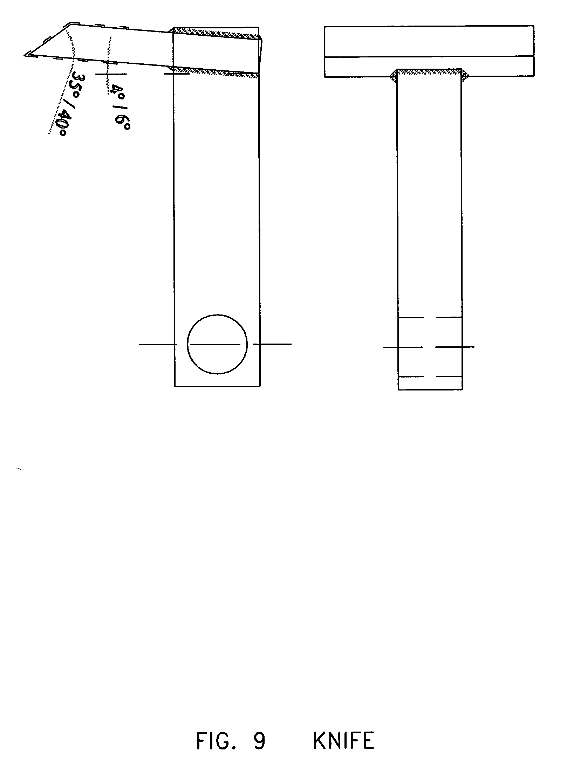

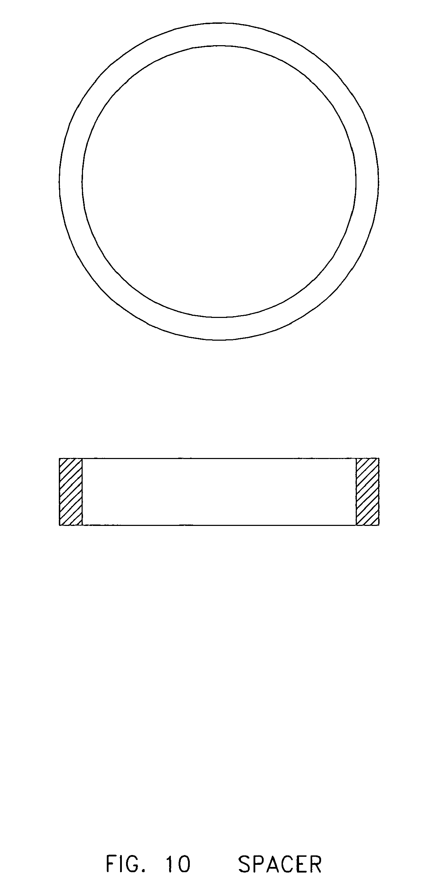

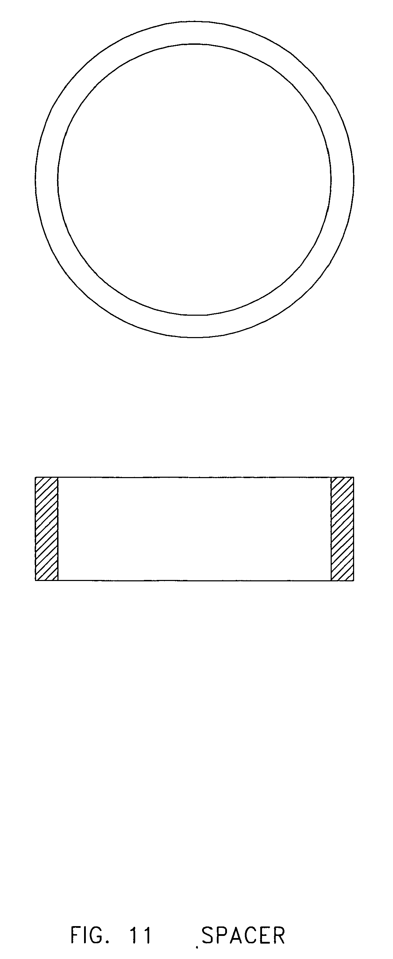

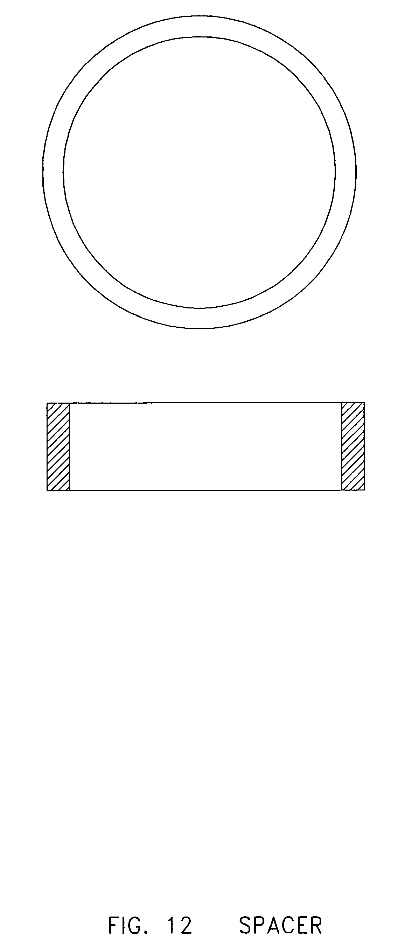

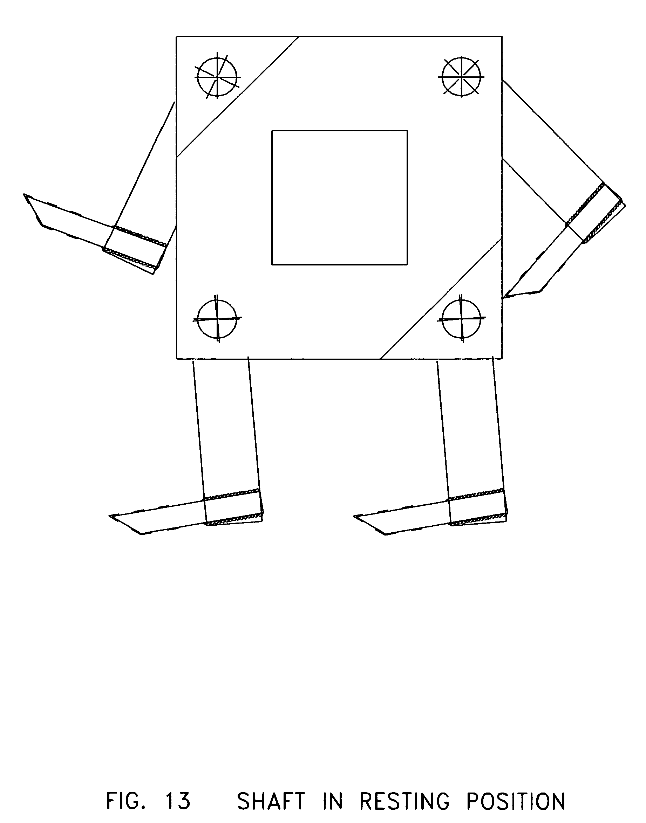

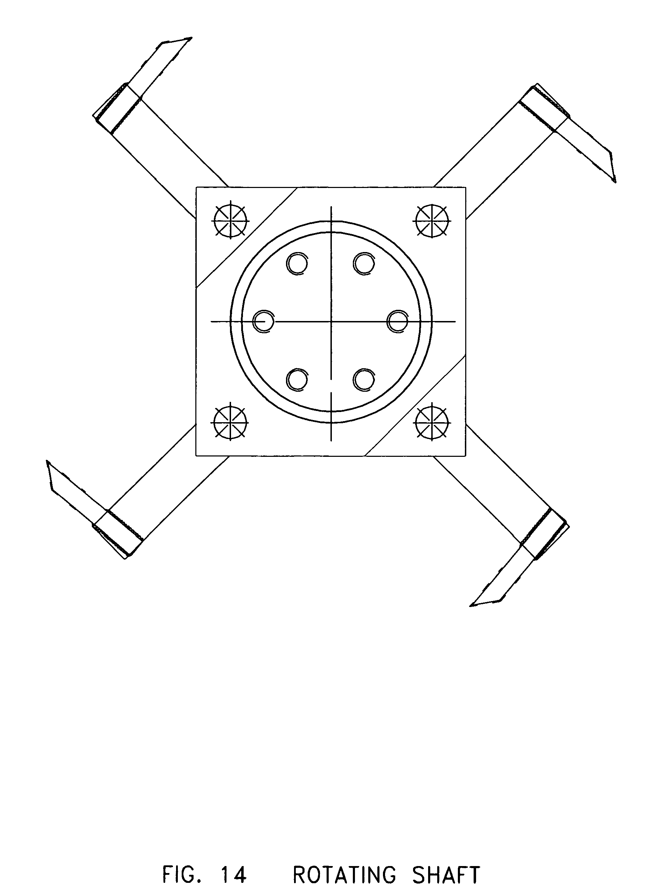

The drawing in picture 4 shows a square with two knives installed on its opposite ends. Underlining the knives places is the aim of this drawing.

The drawing in picture 5 shows the flange (front, back and side view) welded on a shaft end. This flange is shown even in picture 1(5) and picture 2(5).

In this drawing (picture 6) the shaft with square section is represented (front and side view). This shaft is shown even in picture 1(7) and picture 3(7).

The drawing in picture 7 shows the flange (front and back view) screwed at the opposite end of the shaft. This flange is even shown in picture 1(7) and picture 3(7).

The drawing in picture 8 shows the single square (front and side view). This shaft is even shown in picture 1(8), picture 2(8) and picture 3(8).

The drawing in picture 9 shows the whole knife with its specific cutting angles between 35 and 40 degree, and its specific inclination angles between 4 and 6 degree (front and side view). This knife is even shown in picture 1(9), picture 2(9) and picture 3(9).

The drawing in picture 10 represents the spacer placed between the two squares, which hold the knives (side and front view). This spacer is even shown in picture 1(10), picture 2(10) and picture 3(10).

The drawing in picture 11 shows the spacer, which divides the couples of squares (side and front view). This spacer is even shown in picture 1(11), picture 2(11) and picture 3(11).

The drawing in picture 12 shows the spacer installed on the two shaft ends (front and side view). This spacer is even represented in picture 1(12), picture 2(12), picture 3(12).

The drawing in picture 13 shows a couple of double squares with knives at rest. Underlining knives oscillation is the aim of this drawing.

The drawing in picture 14 shows a couple of double squares with rotating knives.

In order to create the invention a square section pipe (called shaft picture 6) is necessary. Its dimensions, side and thickness, depend on length and number of couples of squares with knives, which must be installed on it according to modularity here described.

The dimensions of the double squares (as in the invention picture 8) must be suitable to the shaft dimensions. Knives (picture 9) composed of handle and cutting edges can have different dimensions according to shaft dimensions. But features of inclination and cutting edge must not change. The cutting edge must be welded on the handle with a specific inclination between 4 and 6 degree compared with itself, as in picture (9). The blade has a cutting angle between 35 and 40 degree. The knife blade is hardened by induction hardening.

Knives are fixed on the top of the two squares (as in picture 4) holding them by threaded pins, which allow their motion (picture 1(49) (50) (51) (24). On the square section shaft there are installed the double squares and the knives. Many couples of squares and knives are placed on the shaft. Their number depends on the shaft dimensions.

Assembly sequence:
a) On the shaft (picture 6), composed of pipe and flange (picture 5) welded with safety pin on, the spacer is inserted outside the shaft (picture 12) and leant against the flange (picture 5);
b) then the first square is installed (picture 8), then the spacer (picture 10) and at last the second square (picture 8), so building the first couple for fixing the knives;
c) then the spacer is installed (picture 11), which divides the couples of squares;
d) now install a third square (picture 8) in the shaft by rotating it 90 degree compared with the previous ones;
e) install the spacer shown in picture 10;
f) install the fourth square as for the third one. The third and the fourth square form in this way the second couple;
g) install spacer as in point c) and repeat sequence from point b) to point g) till the assembly of all the squares;
h) install the last spacer shown in picture 12;
i) insert the screwed closing flange and clamp the screw completely by washers represented in picture 1(24), picture 1(49), picture 1(50), picture 1(51);
j) install the knives at the ends of the squares by threaded pins and nuts as in picture 1, picture 1(24), picture 1(49), picture 1(50), picture 1(51).

This shaft will be installed inside a protection cover connected with the machine by a frame/forks. This union joint will support even deambulation and rotation movement by some mechanical gears.

The shaft rotation, produced by power supply with clutch on, controls movement to the squares supporting the knives. Position, angulations, and rotation of the knives allow grinding of leaves, shrubs, bushes.

This invention concerns industry of agricultural and forest machines. In particular it will be used for cleaning undergrowths and reclaiming uncultivated lands.

This product can be easy installed even on small machines and in areas where it is difficult to enter with big machines. High efficiency is guaranteed anyway. The possibility to have the shaft with different dimensions makes the shaft suitable for different working needs, customers and market requests, because it can be installed on machines of different size. Modifications or changes in this invention can be considered if respecting declared aims and attached claims. For example, because of its particular form and the modular system the shaft can be built of different length and dimensions and it can even have a couples of squares number different from the one represented in picture 1.

## Claims

1. A shaft equipped with knives, which is able to grind and mince shrubs, branches, undergrowth and grass. It is useful for lands deforestation. It is a shaft with square section, on which metallic supports, called squares, are installed. These supports hold knives with same dimensions, weight and with particular blade inclination and cutting edge. The knives are divided by spacers and placed in alternating positioning.

2. A shaft as in claim 1, where the shaft picture 6 has a square section.

3. A shaft with square section, as in one or more of the previous claims, on which there have to be installed couples of squares picture 8; two knives are mounted on their opposite ends picture 9.

4. A shaft with square section, as in one or more of the previous claims, equipped with knives, whose cutting edges are welded on their handles as indicated in picture 9, with a particular inclination angle between 4 and 6 degree compared to the handles themselves as in picture 9.
The cutting edges have a cutting angle between 35 and 40 degree and they are hardened by induction hardening.

5. A shaft with square section, as in one or more of the previous claims, where a couple of squares with their knives, divided by spacers, works together with another couple of squares and their knives, all this mounted on the shaft with the second couple of squares rotated 90 degree if compared with the first one as in picture 13 and picture 14.

6. A shaft with square section, as in one or more of the previous claims, where spacers are installed according to a precise alternation: there is a spacer between the squares picture 10, there is a spacer between the couple of squares picture 11.

7. A shaft with square section, as in one or more of the previous claims, where the assembled details are repeated and alternated.
They are assembled according to what claimed and shown in the attached drawings.

8. A square sectioned shaft as is in one or more of the previous claims, where the number of the installed couples of squares can change.
